# EUROPEAN PATENT APPLICATION

(11) **EP 3 133 175 A1**
(43) Date of publication of application: **22.02.2017**
(21) Application number: 15181635.2
(22) Date of filing: 19.08.2015
(51) Int. Cl.: C22B 7/00, C22B 3/00

(54) **SYSTEM AND PROCESS FOR RECOVERING CATALYTIC PRECIOUS METAL FROM AQUEOUS GALVANIC PROCESSING SOLUTION**

(71) Applicant: Enthone, Inc., West Haven, CT 06516 (US)
(72) Inventor: Goldacker, Jens, 40670 Meerbusch (DE)
(74) Representative: Michalski Hüttermann & Partner Patentanwälte mbB

(57) **Abstract**

A system for recovering catalytic precious metals from aqueous galvanic processing solution is provided, said system comprising at least one holding tank, and at least one filtration unit, wherein the holding tank holds the galvanic processing solution and the filtration unit comprises an ultrafiltration means and wherein said filtration unit is in hydraulic connection with the holding tank, wherein the filtration unit is capable of providing a permeate stream having a reduced concentration of catalytic precious metal relative to the fed of said filtrations unit and a concentrate stream having an increased concentration of catalytic precious metal relative to the fed of said filtrations unit, and which characterized in that the system comprises at least one heat-exchanger being hydraulically arrange between the holding tank and the filtration unit and being capable to limit the average temperature T_{R1} of the aqueous galvanic processing solution to ≤ 50°C, preferably ≤ 45°C, more preferably ≤ 40°C prior to entering the filtration unit.

## Description

The invention relates to a system for recovering catalytic precious metal from aqueous galvanic processing solution. In another aspect the invention relates to a process for recovering catalytic precious metals from aqueous galvanic processing solution.

Aqueous galvanic processing solution in the meaning of this invention are, e.g. electrolytes for the autocatalytic or galvanic deposition of metal layers on substrate surfaces, aqueous etching, pre-etching or conditioning solutions for the preparation of surfaces to be plated with a metal layer, or rinse solutions.

Catalytic precious metals in the meaning of this invention are, e.g. gold, silver, platinum, palladium, copper, iridium, ruthenium, bismuth, antimony or colloids of these metals with colloid-metals, like e.g. tin, iron, etc.

In a more specific way, the current inventions relates to a system and a method for recovering palladium and / or palladium colloids from aqueous galvanic process solution, especially from rinse solution or spent activator solutions used in processes for electroless plating of non-conductive plastic surfaces.

Electroless plating in general refers to the chemical deposition of a metal on a conductive, non-conductive, or semi-conductive substrate in the absence of an external electric source. Electroless deposition is used for many purposes, for example, in the manufacture of printed ED 40657 / UAM circuit boards where, in one method, an electroless metal, often copper, is deposited on a dielectric substrate either as a uniform surface coating or in a predetermined pattern. The initial electroless copper deposit is thin and may be further built up by electroplating or may be deposited directly to full thickness. In general, electroless plating is used for both functional and decorative coatings in a variety of industries, like e.g. automotive, aerospace, naval, medical devices, fittings, electronics, etc.

A huge field of application for electroless plating is plating of non-conductive substrates, like e.g. plastic substrates. The electroless deposition of a metal on a non-conductive substrate requires pretreatment or sensitization of the substrate to render it catalytic to reception of a metal deposit. Catalytic metal colloids are often used as the sensitizer or seeder to prepare the substrate for reception of the metal. Such processes are also known as direct metallization.

Catalytic metal colloids are dispersions formed by the admixture of a catalytic metal ion and a non-catalytic metal ion in an amount in excess of the catalytic metal ion. Such dispersions are often formed in acidic solutions but also may be formed in alkaline solutions. Suitable catalytic metal ions are well known in the art. Especially precious metal ions are commonly used as catalytic metal ions. Examples of highly desirable catalytic metal ions are the ions of gold, platinum and palladium. An example of a suitable non-catalytic metal ion used to form the metal colloid is stannous metal. Colloidal baths or solutions may contain tin in amounts of from about 10 to about 50 or more times than the amount of catalytic metal. Typically, a catalytic metal such as palladium may range in concentrations of from about 50ppm to about 300ppm in the colloid bath. Such catalysts are commercially available, for example under the name ENVISON by company Enthone Inc. West Haven, CT, USA.

Prior to electroless metal deposition on a substrate, such as plastic substrate or a printed circuit board, the part of the substrate to be plated is immersed in a colloidal bath or solution. The substrate is then rinsed with water prior to be brought into contact with an electrolyte for the electroless deposition of the metal intended to form a metal layer on said substrate. However, about 70% or more of the catalyst consumed by the substrate during immersion is washed off of the substrate by the rinse. Thus, only about 30% or less of the catalyst remains on the substrate. Due to the content of valuable precious metals the catalytic metal colloids represent one of the major cost factors in electroless metal deposition processes. Thus, recovering the catalytic metal colloids, especially from the rinse, for reuse is highly desirable. However, recovery of the catalytic metal from the rinse is difficult because the catalytic metal is contained in these aqueous solutions in small concentrations, only. Therefore, the rinse is often discarded with the loss of the valuable catalytic metal.

In addition to the loss of catalytic metal from rinses, catalytic metals also may be lost from the catalytic metal colloidal solutions or baths since these solutions become ineffective by contaminates of the period of use. Often, when such solutions are no longer usable for said reason the bath is discarded as waste, by the same time discarding the precious metals contained therein.

Recovering of the metals would reduce production costs significantly. Furthermore, for discarding often large volumes of liquid waste are transported far distances to designated sites for proper disposal. By recovering such metals on the plating shop site transportation can be avoided and thus add further economical and ecological benefit to the overall plating process.

Hence, since recovery of catalytic metals from catalytic metal colloids is highly desirable some attempts have been taken to provide methods for recovering said catalytic precious metals from colloidal metal catalysts. US-Patent 4,435,258 discloses a method of recovering palladium from spent electroless catalytic baths employing an electrolytic cell. The method of recovery disclosed in the said patent involves (a) dissolving tin/palladium colloid in a spent catalytic bath with an oxidizing agent such as hydrogen peroxide to form a true solution; (b) heating the bath to a temperature and for a time sufficient to essentially remove excess hydrogen peroxide; (c) placing the solution in an electrolytic cell having (1) a nickel anode, and (2) a cathode composed of a metal or metallic surface, such as copper or nickel, for the palladium to be deposited; and (d) electrodeposition of palladium from the solution onto the cathode at a voltage that allegedly tends to minimize and substantially reduce tin deposits. There are many disadvantages with such a method. Electrolytic cells can be costly. The consumer of the palladium colloid either has to invest in purchasing such electrolytic cells, or pay the cost of transporting the spent catalytic bath to a site where the electrolytic cell is located. Because of the weight of fluids, the cost of transporting the bath to the recovery site is expensive.

EP 1 314 788 B1 discloses a method of recovering catalytic metals from a fluid containing catalytic metal colloids by concentrating the catalytic metal colloids as a precipitate on a porous metal filter followed by removing the precipitate from the porous metal filter by backwashing the filter with a fluid, solubilizing the precipitate, and then retrieving the catalytic metals.

U.S. provisional patent application serial number 60/262,592 discloses an efficient method of recovering catalytic metals from solutions containing catalytic metal colloids. The method involves recovering catalytic metal colloids from solutions by capturing the colloids on a filter as a precipitate followed by washing the precipitate with an oxidizing agent until the catalytic metal is removed from the filter. The catalytic metal is recovered in a separate container and then collected on an adsorbent. The adsorbent is burned and the catalytic metal is retrieved. The filters used to collect the catalytic metal colloid are disposed of. Although the method provides an efficient means of recovering catalytic metal, there is still a need for an improved method.

German patent DE 100 24 239 describes the recovery of catalytic Pd from a colloidal solution using a filter made out of ceramic or polymeric material.

A significant drawback of the methods and systems know from the state of the art is that over the time of use the filter used to separate the colloids and/or metals form the aqueous solution starts to clog and needs to be cleaned, e.g. by back flushing the filter. Hence, the filter does not provide a constant stream of filtrate, but filtrate flow rate will decrease with increased clogging and rise again after cleaning. For the system no steady state of operation can be gained over an adequate period of time. Furthermore, cleaning operations, like e.g. back flushing causes additional mechanical stress to the filters uses which results in an increased need for maintenance of the filters, or in worst case to a damage of the filter.

Furthermore, in most of the recovering processes known from the state of the art pre-treatment of the aqueous process solution is needed, like e.g. pH-adjustment, oxidation, reduction, precipitation.

It is therefore an object of the invention to provide an improved system and a method recovering catalytic precious metal from aqueous galvanic processing solution.

With respect to the system this aim is achieved by a system according to claim 1. With respect to the method, this aim is achieved by a method according to independent claim 11.

Hence, a system for recovering catalytic precious metals from aqueous galvanic processing solution is provided, said system comprising at least one holding tank, and at least one filtration unit, wherein the holding tank holds the galvanic processing solution and the filtration unit comprises an ultrafiltration means and wherein said filtration unit is in hydraulic connection with the holding tank, wherein the filtration unit is capable of providing a permeate stream having a reduced concentration of catalytic precious metal relative to the fed of said filtrations unit and a concentrate stream having an increased concentration of catalytic precious metal relative to the fed of said filtrations unit, and which characterized in that the system comprises at least one heat-exchanger being hydraulically arrange between the holding tank and the filtration unit and being capable to limit the average temperature T_{R1} of the aqueous galvanic processing solution to ≤ 50°C, preferably ≤ 45°C, more preferably ≤ 40°C prior to entering the filtration unit. In a preferred embodiment according to the invention the average temperature T_{R1} of the aqueous galvanic processing solution is in a range of between ≤ 50°C and ≥30°C, preferably between ≤ 45°C and ≥35°C.

Surprisingly, it was found that by using a heat exchanger to limit the average temperature T_{R1} of the aqueous galvanic processing solution to ≤ 50°C the clogging of the filter unit can be reduced significantly, thereby reducing the need for maintenance. Furthermore, it was surprisingly found that when limiting the average temperature T_{R1} of the aqueous galvanic processing solution to ≤ 50°C no addition pre-treatment of the process solution is needed. By keeping the average temperature T_{R1} above 30°C the hydraulic properties of the solution beneficial contributes to the filtering process.

According to another embodiment of the invention, the system further comprises a second heat exchanger arranged downstream the concentrate stream of said filtration unit and a second filtration unit comprising an ultrafiltration means, said filtration unit is capable of providing a permeate stream having a reduced concentration of catalytic precious metal relative to the fed of said filtrations unit and a concentrate stream having an increased concentration of catalytic precious metal relative to the fed of said filtrations unit and wherein the second heat-exchanger is hydraulically arrange between the ultrafiltration unit and the second ultrafiltration unit and being fed by the concentrate stream of the first filtration unit and wherein the second heat exchanger is capable to limit the average temperature T_{R2} of the concentrate stream coming from the ultrafiltration unit to ≤ 50°C, preferably ≤ 45°C, more preferably ≤ 40°C prior to entering the second filtration unit. In a preferred embodiment according to the invention the average temperature T_{R2} of the aqueous galvanic processing solution is in a range of between ≤ 50°C and ≥30°C, preferably between ≤ 45°C and ≥35°C. By such cascadized arrangement of the components the recovering capacity of the system can be increase significantly. Furthermore, the concentration of precious metal in the concentrate stream can be increased significantly which eases the final recovering of the metal form the resulting concentrate or enables the concentrate to be added directly to the bath used in the catalyzing process step of the plating process.

Yet, in another embodiment the system comprises a concentrate tank receiving the concentrate stream coming from the second filtration unit, said concentrate tank comprising an overflow entering into the second heat exchanger, and wherein the second heat exchanger comprises an overflow entering into the heat exchanger. Such kind of cascade further increases the efficiency of the system with respect to flow-rate and recovering performance.

According to another embodiment of the invention, the system comprise a feed pump pumping the aqueous galvanic processing solution from the holding tank into the heat exchanger and/or a feed pump pumping the aqueous galvanic processing solution from the heat exchanger into the filtration unit, and/or a feed pump pumping the concentrate coming from the second heat exchanger into the filtration unit.

In an even more preferred embodiment of the invention, the system comprises measuring means which are electronically connected to a control unit. Said control unit is electronically connected to one or more of the feed pumps and is capable of controlling at least one of said feed pumps in dependence of the data retrieved from said measuring means.

Preferably, the measuring means are independently selected from the group consisting of conductivity probe, density probe, temperature probe, filling level probe, IR-absorption probe, UV-VIS-absorption probe, turbidity probe, chloride probe. Such probes will provide data based on which an overall process control is very effective. Preferably, the system comprises a number of different probes detecting different physic-chemical parameters of the solutions within the system.

According to another embodiment of the invention, the ultrafiltration means (131,132) has a NMWC (nominal molecular weight cut-off) ≤ 500kDa, preferably in a range of between ≥ 0.75kDa and ≤ 20kDa, more preferably in a range of between ≥ 1kDa and ≤ 20kDa, more preferably in a range of between ≥ 5kDa and ≤ 15kDa, even more preferably in a range of between ≥ 2kDa and ≤ 8kDa, and most preferably in a range of between ≥ 4kDa and ≤ 6kDa. It was found that by such NMWC the colloids and precious metals contained in the aqueous galvanic processing solution to be treated can effectively be separated in enriched in a concentrate for further use.

According to another embodiment of the invention, the first ultrafiltration means has a different NMWC than the second ultrafiltration means, preferably a greater NMWC.

For example, according to another embodiment of the invention, the first ultrafiltration means has a NMWC of 15kDa, while the second ultrafiltration means has a NMWC of 5kDa. Such combination is especially beneficial for recovering catalytic precious metals from rinse waters. According to another embodiment of the invention, the first ultrafiltration means has a NMWC of 5kDa, while the second ultrafiltration means has a NMWC of 0.75kDa. Such combination is especially beneficial for recovering catalytic precious metals from spent activator solutions having a high precious metal concentration.

According to yet another embodiment of the invention, the system comprises a means to re-feed the permeate coming from the filter units to the holding tank. Preferably, said means is a common means, like a common central re-feed pipe.

Within the invention it is especially preferred that the holding tank is a galvanic process tank selected from the group consisting of a plating tank, an etching tank, an activation tank, and a rinse tank. This enables that the inventive system is being integrated into existing plating lines, or already existing plating lines can be retrofitted with the inventive system. However, standalone use of the inventive system within the scope of use of the system, too.

With respect to the method, a method for recovering catalytic precious metals from aqueous galvanic processing solution by ultrafiltration, which method is characterized in that the ultrafiltration is performed under isothermal condition, preferably at a temperature ≤ 30°C, more preferably ≤ 25°C, most preferably ≤ 20°C. Surprisingly, it was found that by performing filtration of according aqueous galvanic processing under isothermal conditions clogging of the filtration means can be reduced significantly, or even be avoided over a long period of use.

According to a preferred embodiment of the invention, the ultrafiltration is performed as crossflow within the filtration means. Crossflow filtration is different from dead-end filtration in which the feed is passed through a membrane or bed, the solids being trapped in the filter and the filtrate being released at the other end. Crossflow filtration gets its name because the majority of the feed flow travels tangentially across the surface of the filter, rather than into the filter membrane.

In crossflow filtration, the feed is passed across the filter membrane (tangentially) at positive pressure relative to the permeate side. A proportion of the material which is smaller than the membrane pore size passes through the membrane as permeate or filtrate; everything else is retained on the feed side of the membrane as retentate or concentrate.

According to another embodiment of the invention, the ultrafiltration has a NMWC ≤ 500kDa, preferably in a range of between ≥ 1kDa and ≤ 10kDa, more preferably in a range of between ≥ 2kDa and ≤ 8kDa, and most preferably in a range of between ≥ 4kDa and ≤ 6kDa.

Most preferably, prior to the ultrafiltration the aqueous galvanic processing solution is not subject to any of pH-adjusting pretreatment, oxidation and/or reduction pretreatment, precipitation pretreatment.

The invention is explained in more detail by the following figure and descriptions.

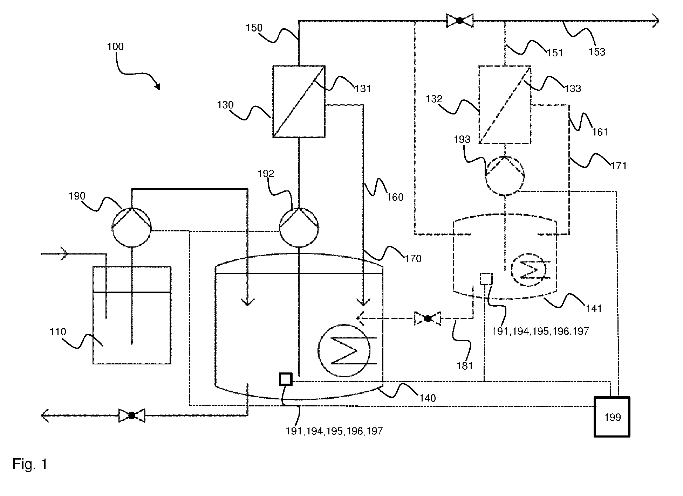

Fig. 1 shows a system for recovering catalytic precious metals from aqueous galvanic processing solution according to an embodiment of the invention.

In Fig. 1 a system 100 for recovering catalytic precious metals from aqueous galvanic processing solution is shown, said system comprising at least one holding tank 110, and at least one filtration unit 130. The holding tank 110 holds the galvanic processing solution. The filtration unit 130 comprises an ultrafiltration means 131, like e.g. a polymeric membrane. Said filtration unit 130 is in hydraulic connection with the holding tank 110. Said filtration unit 130 is capable of providing a permeate stream 150 having a reduced concentration of catalytic precious metal relative to the fed of said filtrations unit 130 and a concentrate stream 160 having an increased concentration of catalytic precious metal relative to the fed of said filtrations unit 130. Furthermore, the system comprises at least one heat-exchanger 140 being hydraulically arranged between the holding tank 110 and the filtration unit 130. Said heat-exchanger is capable to limit the average temperature T_{R1} of the aqueous galvanic processing solution to ≤ 50°C, preferably ≤ 45°C, more preferably ≤ 40°C, but ≥ 30°C, preferably ≥ 35°C prior to entering the filtration unit 130. The system 100 optionally further comprises a second heat exchanger 141 arranged downstream the permeate stream 150 of said filtration unit 130 and a second filtration unit 132 comprising an ultrafiltration means 133. Said filtration unit 132 is capable of providing a permeate stream 151 having a reduced concentration of catalytic precious metal relative to the fed of said filtrations unit 132 and a concentrate stream 161 having an increased concentration of catalytic precious metal relative to the fed of said filtrations unit 132. The second heat-exchanger 141 is hydraulically arranged between the ultrafiltration unit 130 and the second ultrafiltration unit 132 and is fed by the permeate stream 150 of the first filtration unit 130. Said second heat exchanger 141 is capable to limit the average temperature T_{R2} of the permeate stream 150 coming from the ultrafiltration unit 130 to ≤ 50°C, preferably ≤ 45°C, more preferably ≤ 40°C, but ≥ 30°C, preferably ≥ 35°C prior to entering the second filtration unit 132. The system further comprises at least one feedback line 170,171 guiding at least one concentrate stream 160,161 coming from the filtration unit 130,132 back to the heat exchanger 140,141 upstream to the filtering unit 130,132 from which the respective concentrate stream 160,161 descends from. The second heat exchanger 141 comprises an overflow 181 entering into the heat exchanger 140. The ultrafiltration means 131,132 have a NMWC nominal molecular weight cut-off ≤ 500kDa, preferably in a range of between ≥ 1kDa and ≤ 10kDa, more preferably in a range of between ≥ 2kDa and ≤ 8kDa, and most preferably in a range of between ≥ 4kDa and ≤ 6kDa. The ultrafiltration means 131 has a different NMWC than the second ultrafiltration means 132, preferably a greater NMWC. The system further comprises a feed pump 190 pumping the aqueous galvanic processing solution from the holding tank into the heat exchanger 140. A second feed pump 192 pumping the aqueous galvanic processing solution from the heat exchanger 140 into the filtration unit 130 is arranged within the system, as well as a third feed pump 193 pumping the concentrate coming from the second heat exchanger 141 into the filtration unit 132. The system comprises measuring means 191,194,195,196,197 which are electronically connected to a control unit 199, like e.g. a programmable logic controller (PLC) or a computer system. The PLC or the computer system may be electronically connected to further control units controlling the plating process from which the aqueous galvanic process solution results. Said control unit 199 is electronically connected to one or more of the feed pumps 190,192,193 and is capable of controlling at least one of said feed pumps 190,192,193 in dependence of the data retrieved from said measuring means 191,194,195,196,197. The measuring means 191,194,195,196, 197 are selected from the group consisting of conductivity probe, density probe, temperature probe, filling level probe, IR-absorption probe, UV-VIS-absorption probe, turbidity probe, chloride probe. A common re-feed pipe 153 is provided to re-feed the permeate 150,151 to the holding tank 110. Said holding 110 tank is a plating tank, an etching tank, an activation tank, or a rinse tank within the process of galvanic deposition of a metal layer on a non-conductive substrate, or is a disposal tank or a savage line.

## Claims

1. System (100) for recovering catalytic precious metals from aqueous galvanic processing solution, said system comprising at least one holding tank (110), and at least one filtration unit (130), wherein the holding tank (110) holds the galvanic processing solution and the filtration unit (130) comprises an ultrafiltration means (131) and wherein said filtration unit (130) is in hydraulic connection with the holding tank (110), wherein the filtration unit (130) is capable of providing a permeate stream (150) having a reduced concentration of catalytic precious metal relative to the fed of said filtrations unit (130) and a concentrate stream (160) having an increased concentration of catalytic precious metal relative to the fed of said filtrations unit (130), **characterized in that** the system comprises at least one heat-exchanger (140) being hydraulically arranged between the holding tank (110) and the filtration unit (130) and being capable to limit the average temperature T_{R1} of the aqueous galvanic processing solution to ≤ 50°C, preferably ≤ 45°C, more preferably ≤ 40°C prior to entering the filtration unit (130).

2. The system according to claim 1, wherein the system further comprises a second heat exchanger (141) arranged downstream the permeate stream (150) of said filtration unit (130) and a second filtration unit (132) comprising an ultrafiltration means (133), said filtration unit (132) is capable of providing a permeate stream (151) having a reduced concentration of catalytic precious metal relative to the fed of said filtrations unit (132) and a concentrate stream (161) having an increased concentration of catalytic precious metal relative to the fed of said filtrations unit (132) and wherein the second heat exchanger (141) is hydraulically arranged between the ultrafiltration unit (130) and the second ultrafiltration unit (132) and being fed by the permeate stream (150) of the first filtration unit (130) and wherein the second heat exchanger (141) is capable to limit the average temperature T_{R2} of the permeate stream (150) coming from the ultrafiltration unit (130) to ≤ 50°C, preferably ≤ 45°C, more preferably ≤ 40°C prior to entering the second filtration unit (132).

3. The system according to any of the preceding claims, wherein the system comprises at least one feedback line (170/171) guiding at least one concentrate stream (160/161) coming from the filtration unit (130/132) back to the heat exchanger (140/141) upstream to the filtering unit (130/132) from which the respective concentrate stream (160/161) descends from.

4. The System according to any of the preceding claims, further comprising a feed pump (190) pumping the aqueous galvanic processing solution from the holding tank into the heat exchanger (140) and/or a feed pump (192) pumping the aqueous galvanic processing solution from the heat exchanger (140) into the filtration unit (130), and/or a feed pump (193) pumping the concentrate coming from the second heat exchanger (141) into the filtration unit (132).

5. The system according to any of the preceding claims, furthermore comprising measuring means (191,194,195,196,197) electronically connected to a control unit (199), said control unit (199) being electronically connected to one or more feed pumps (190,192,193) and being capable of controlling at least one of said feed pumps (190,192,193) in dependence of the data retrieved from said measuring means (191,194,195,196,197).

6. The system according to claim 5, wherein the measuring means (191,194,195,196,197) are independently selected from the group consisting of conductivity probe, density probe, temperature probe, filling level probe, IR-absorption probe, UV-VIS-absorption probe, turbidity probe, chloride probe.

7. The system according to any of the preceding claims, wherein the ultrafiltration means (131,132) has a NMWC (nominal molecular weight cut-off ≤ 500kDa, preferably in a range of between ≥ 0.75kDa and ≤ 20kDa, more preferably in a range of between ≥ 1kDa and ≤ 20kDa, more preferably in a range of between ≥ 5kDa and ≤ 15kDa, even more preferably in a range of between ≥ 2kDa and ≤ 8kDa, and most preferably in a range of between ≥ 4kDa and ≤ 6kDa.

8. The system according to claim 7, wherein the ultrafiltration means (131) has a different NMWC than the second ultrafiltration means (132), preferably a greater NMWC.

9. The system according to any of the preceding claims, further comprising a means (153) to re-feed the permeate (150,151) to the holding tank (110).

10. The system according to any of the preceding claims, wherein the holding tank (110) is a galvanic process tank selected from the group consisting of a plating tank, an etching tank, an activation tank, and a rinse tank.

11. A method for recovering catalytic precious metals from aqueous galvanic processing solution by ultrafiltration, **characterized in that** the ultrafiltration is performed under isothermal condition, preferably at a temperature ≤ 50°C, more preferably ≤ 45°C, most preferably ≤ 40°C.

12. The method according to claim 11, wherein the ultrafiltration has a NMWC ≤ 500kDa, preferably in a range of between ≥ 0.75kDa and ≤ 20kDa, more preferably in a range of between ≥ 1kDa and ≤ 20kDa, more preferably in a range of between ≥ 5kDa and ≤ 15kDa, even more preferably in a range of between ≥ 2kDa and ≤ 8kDa, and most preferably in a range of between ≥ 4kDa and ≤ 6kDa.

13. The method according to any of claims 11 and 12, wherein prior to the ultrafiltration the aqueous galvanic processing solution is not subject to any of pH-adjusting pretreatment, oxidation and/or reduction pretreatment, precipitation pretreatment.

14. Use of a system according to any of the claims 1 to 11 for performing a method according to any of the claims 11 to 13.
